# EUROPEAN PATENT SPECIFICATION

(11) **EP 4 523 517 B1**
(45) Date of publication and mention of the grant of the patent: **04.11.2026**
(21) Application number: 23197949.3
(22) Date of filing: 18.09.2023
(51) Int. Cl.: A01F 15/08

(54) **A METHOD FOR AUTOMATIC UNBLOCKING OF A FEED INTAKE PLUG IN A BALER TOWED BY A TRACTOR AND AN AGRICULTURAL SYSTEM IMPLEMENTING THE METHOD**
VERFAHREN ZUR AUTOMATISCHEN FREIGABE EINES FUTTEREINLASSSTOPFENS IN EINER VON EINEM TRAKTOR GEZOGENEN BALLENPRESSE UND LANDWIRTSCHAFTLICHES SYSTEM ZUR IMPLEMENTIERUNG DES VERFAHRENS
PROCÉDÉ DE DÉBLOCAGE AUTOMATIQUE D'UN BOUCHON D'ADMISSION D'ALIMENTATION DANS UNE PRESSE À BALLES REMORQUÉE PAR UN TRACTEUR ET SYSTÈME AGRICOLE METTANT EN UVRE LE PROCÉDÉ

(43) Date of publication of application: 19.03.2025
(73) Proprietor: Kverneland Group Ravenna S.r.l., 48026 Russi (RA) (IT); Kverneland Group Mechatronics BV, 2153 LR Nieuw-Vennep (NL)
(72) Inventor: TJALMA, Indra, 8313 AW Rutten (NL); FRASCELLA, Cosimo, 48022 Lugo (Ravenna) (IT); CALDIRONI, Nicola, 48123 Ravenna (IT)
(74) Representative: Conti, Marco

(56) References cited:
- US-A1- 2012 238 335
- US-A1- 2017 105 353
- US-A1- 2022 408 632
- US-A1- 2023 157 213
- US-A1- 2023 276 738
- US-B2- 9 468 149

## Description

This invention relates to an automatic unblocking of a feed intake plug in a baler towed by a tractor and an agricultural system implementing the method.

Balers, or hay balers, are machines that gather and compress previously cut agricultural products such as rice straw, grass, wheat, maize, and the like (hereinafter referred to as "hay") from the ground, form a bale out of the hay and discharge it onto the field. Balers can be connected to rear part of a machine, such as a tractor, which is driven by an operator. Typically, balers have a feeding unit at their front end to pick up the hay from the ground, a compression chamber to form the bale and a rotor apparatus to feed the hay picked-up from the ground to the compression chamber of the baler.

After being collected (and optionally pressed and cut up by means of a further rotor, or other similar device), the material is rearranged on a central supply channel by the action of screw feeders. From this channel, the material is finally transferred toward a chamber in which the bale is formed, typically (but not exclusively) with a circular shape.

One of the issues which can be faced during the baling operation is that the amount of the crop coming into the pickup exceeds its capacity and either the baler starts pushing the crop, instead of baling it, or the baler becomes plugged downstream from the pickup, therefore, an occasional excessive build-up of material at a transverse portion of the working shaft of the pick-up may cause the jamming and sudden locking of said shaft This feed intake plug may occur when the power unit (arranged upstream of the power take-off unit with which these farm machines are typically provided) is still active. When a plug occurs, the various subsystems of the baler may not operate correctly and/or become damaged Therefore, it is of high importance to detect such a plug and provide an appropriate solution in case of plug detection.

In this context patent document EP4201194A discloses a system for adjusting a tractor speed based on a performance of a pickup of a baler in order to provide an enhanced feeding and to prevent the pickup jamming. Moreover, patent document EP2836060A, in the name of the same applicant, regards the problem of feed plug at the pickup unit.

Document EP2836060A discloses a device and a method, which in response to plug detection interrupts the transmission of power to the pick-up unit. Indeed, when the operator is faced with pick-up jamming, they often personally take care of the removal of the jam. In order to remove the plug, the operator manually removes the material accumulated on the pick-up unit. This operation can be dangerous if the operator performs the plug removal activity without having first stopped the transmission of power to the pick-up or if the power is undesirably applied to the pickup unit when the operator is still in the midst of cleaning out or resetting the pickup unit. The solution of EP2836060A aims to provide the operator with a higher level of safety in case of plug detection.

As mentioned above, in case of plug detection, the process of plug removal is carried out manually by the operator. This process can be time consuming and dangerous if done manually.

Therefore, it is essential to provide a solution which allows to remove the pick-up plug in an efficient and reliable way.

Moreover, patent document US2012238335A discloses an unplugging apparatus and method for the unplugging of a feeding system of a baler. Scope of the present invention is to provide an efficient and reliable method for automatic unblocking of a feed intake plug in a baler towed by a tractor and an agricultural system implementing the method. US 2022/408632 A1 discloses an automatic unplugging method for a baler towed by a tractor, comprising detection of a plug, disengagement of the PTO, actuation of the drop floor by a hydraulic actuator, re-engagement of the PTO to move the plug while the drop floor is in its lowered position, checking whether the plug has been cleared, and returning the drop floor and other elements to the normal operating position.

Scope of the present invention is to overcome at least one of the aforementioned drawbacks.

This scope is achieved by the method for automatic unblocking of a feed intake plug in a baler towed by a tractor and the agricultural system according to the appended claims.

According to an aspect of the present description, the present invention provides a method for automatic unblocking of a feed intake plug in a baler. The baler is towed by a tractor. The baler has a pick-up unit. The pick-up unit picks up hay from the ground. The pick-up unit feeds the hay picked-up from the ground into a compression chamber. The baler has a drop-floor. The drop-floor is located downstream of the pick-up unit. The drop-floor is movable between a lowered position and a raised position. The tractor is provided with a tractor implement management (TIM) control unit. Tractor implement management (TIM) systems are known in this field. Please note that this element can be also called as baler control unit. In the following we refer to this element as "TIM control unit", however, it should be noted that alternatively, "baler control unit" can be used as well. Basically, TIM system is electrically connected with a number of sensors of the implement (for example baler) and is designed to allow bi-directional exchange of control data between the tractor and the implement. TIM system allows to act on electro-mechanical unities of the tractor and controlling tractor functions such as tractor speed, start and stop of the tractor and steering of the tractor based on signals provided by the implement (baler).

In this context, document EP3501247, in the name of the same applicant, and documents EP4059332 and EP4056007 regard utilization of TIM system to provide an enhanced driving condition for tractor.

TIM system is an ISOBUS-based protocol which allows to manage the communication between the tractor and the implement (baler), where the implement can control certain tractor functions. Basically, an electronic control unit (ECU) of the baler communicates with the tractor according to the TIM message protocol.

It is to be mentioned that ISOBUS automation can also be done without TIM system. The TIM system according to the present description is an example of an ISOBUS communication.

Therefore, TIM control unit of the baler establishes bidirectional exchange of control data between the baler and the tractor. The method comprises unblocking steps. The unblocking steps are carried out through the TIM control unit. The unblocking steps includes a step of disengaging a power take-off (PTO) of the tractor. Disengagement of the PTO is carried out in response to a detection of a plug at the pick-up unit of the baler.

The unblocking steps includes a step of commanding a movement of the drop-floor of the baler towards the lowered position.

The unblocking steps includes a step of commanding a re-engagement of the PTO shaft of the tractor, when the drop floor is lowered, and the tractor is stationary.

The unblocking steps includes a step of checking a condition representative of absence of plug at the pick-up.

The unblocking steps includes a step of commanding a movement of the drop-floor of the baler towards the raised position and a restart of the advancement of the tractor if the condition is verified.

It is to be mentioned that the plug detection at the pick-up unit can be carried out by any of the known methods in this field , for example by using a sensor for detecting rotation rate of the working shaft of the pick-up unit, the rotation rate of the rotor shaft (which feeds the pick-up hay to the compression chamber), and/or rotation rate of the driving shaft, comprised in the drive line that transmits the power from the PTO shaft in order to rotate pick-up shaft. In another embodiment, the plug can be detected through a sensor which detects the presence of accumulated crop (hay) in the feeding channel between the pick-up and the rotor.

In case the baler is provided with clutches to connect and disconnect the pick-up unit from the power take-off of the tractor, plug detection can be carried out by detecting clutch disengagement which occurs as a result of crop accumulation at the pick-up unit.

The condition representative of absence of plug at the pick-up can be verified by verifying if the driving shaft or the pick-up shaft rotate after re-engagement of the PTO shaft, since the presence of a plug at the pick-up unit leads interrupts the rotation of the driving shaft and/or the pick-up shaft. Therefore, in one example, the step of checking the condition representative of absence of plug at the pick-up is carried out as a sort of trial and error after re-engaging the PTO.

In the embodiment where a sensor detects the presence of accumulated crop in the feeding channel between the pick-up and the rotor, the step of detecting the condition representative of absence of plug at the pick-up can be carried out by checking through the sensor that the channel is actually free form crop, before or after re-engagement of the PTO.

Therefore, according to one aspect of the present description, when the plug is detected at the pick-up unit of the baler, a series of automatic unblocking steps is carried out through the TIM control unit, which comprise disengaging a power take-off (PTO) of the tractor to interrupt transmission of power from the tractor to the drive line of the baler to avoid possible damages to the pick-up unit of the baler, which, due to the plug is not functioning properly and to prevent the plug to get worse and for safety reasons. The unblocking steps proceed with lowering the drop-floor which allows the accumulated crop to be removed. Then the PTO is re-engaged, and it is checked if the plug is removed. As explained above, the condition which represents absence of plug at the pick-up can be verified in different ways, for example by verifying proper rotation of the driveline of the blare or by directly detecting the presence of plug at the pick-up unit (or the feeding channel between the pick-up which picks up the hay and the rotor which feeds it to the compression chamber). Consequently, if such condition is verified, the drop-floor is moved upwards (back to the position where it was before plug detection) and the tractor starts advancing again. It is to be mentioned that all these unblocking steps are carried out automatically and through the TIM control unit. Therefore, such a solution allows to remove the plug at the pick-up unit and restart the tractor only when the plug is removed, which provides an efficient, safe, and reliable way to remove the plug without any manual intervention of the operator which is time-consuming, dangerous and sometimes not very reliable.

The baler comprises a hydraulic system. The hydraulic system includes a switching device. The hydraulic system includes a drop-floor actuator. The drop-floor actuator is configured for lowering and lifting the drop-floor The hydraulic system includes a pick-up actuator. The pick-up actuator is configured for lowering and lifting the pick-up. The hydraulic system selectively actuates the pick-up and the drop floor.

The step of commanding the movement of the drop-floor includes setting the switching device to feed oil to the drop-floor actuator. The step of commanding the movement of the drop-floor further includes commanding the drop-floor actuator. In one embodiment the switching device is a switching valve which allows to selectively feed oil to the drop-floor actuator and the pick-up actuator. Therefore, in this embodiment, the drop-floor and the pick-up are lifted or lowered one at a time. In another embodiment the switching device may include a drop-floor valve, connected to the drop-floor actuator to feed oil thereto, and a pick-up valve connected to the pick-up actuator to feed oil thereto. Therefore, in the embodiment in which the switching device includes two separate valves it is possible to actuate the drop floor and the pick-up upwards or downwards simultaneously.

The method includes a step of setting the switching device to feed oil to the drop-floor actuator prior to or during the step of re-engaging the PTO of the tractor, so to ensure that the switching device feeds oil to the drop-floor actuator at the time PTO is re-engaged.

Such a solution allows to provide additional power to the drop-floor when the PTO is re-engaged, to further move the drop-floor downwards to make sure that the drop-floor moves all the way down, since during lowering the drop-floor there might be some resistance (for example, due to the crop plugging). Therefore, it would be possible to make sure the drop-floor is completely lowered which provides a more efficient and reliable plug removal.

In on example, in the step of moving the drop floor towards the lowered position, the oil is fed to the drop-floor actuator for at least 5 seconds. This solution would be useful because it allows to make sure that the drop-floor is completely moved downwards. Preferably, in the step of moving the drop floor towards the lowered position, the oil is fed to the drop-floor actuator for 7 seconds.

In another embodiment, a sensor may be provided to detect the position of the drop-floor and verify that it is completely lowered.

The method may comprise a step of displaying an unblocking acknowledgement pop-up on a user interface of the tractor, in response to the plug detection. The unblocking steps are carried out upon receiving, at the TIM control unit, a pop-up authorization command from the user. In particular, the pop-up informs the operator about the plug detection and the beginning of the automatic unblocking steps (sequence). Only when the operator authorizes the pop-up message the automatic sequence starts. In case the operator does not authorize the pop-up, the plug removal must be carried out manually. In one example, the operator authorizes the pop-up though a physical button of the tractor.

The pick-up unit of the baler may include a plurality of knives. The method may include a step of commanding, through the TIM control unit, a retracting movement of the knives, in response to the plug detection. Retracting the knives, if activated before the plug detection, helps removing the accumulated crop at the pick-up unit. It is to be mentioned that the hydraulic system is configured to move the knives between a retracted and activated position (through the switch valve or an individual valve connected to an actuator connected to the knives).

The method may include a step of commanding, through the TIM control unit, a lifting of the pick-up in response to the plug detection. Moreover, the TIM control unit may command a reverse movement of the tractor in response to the plug detection. Often when plug is detected, the tractor moves reversely for several meters. Therefore, in response to the plug detection the TIM control unit may command the tractor to move reversely. In order for the tractor to move reversely, the pick-up unit must be lifted first. The reverse movement of the tractor is preferably carried out before authorizing the acknowledgment pop-up.

The method may include a step of setting the switching device to feed oil to the pick-up actuator and commanding a lowering movement of pick-up before the step of restarting the advancement of the tractor. Therefore, in the example where the pickup is lifted before the reverse movement of the tractor, the pick-up is automatically lowered, through the switching device, before the tractor restarts advancing after the plug removal, to make sure baling can proceed properly.

According to another aspect of the present description, the present invention provides an agricultural system. The agricultural system comprises a baler. The baler has a pick-up unit. The pick-up unit is configured for picking up hay from the ground. The baler includes a compression chamber. The compression chamber receives the hay from the pick-up unit. The baler includes a drop floor. The drop-floor is located downstream of the pick-up unit. The drop-floor is movable between a lowered position and a raised position.

The agricultural system includes a tractor. The tractor is configured to tow the baler. The tractor has a power take-off (PTO) shaft. The power-take-off shaft is configured to transfer power to the baler. The tractor includes a tractor implement management (TIM) control unit. The TIM control unit is programmed to establish bidirectional exchange of control data between the baler and the tractor.

The TIM control unit is set up for receiving a plug signal. The plug signal is representative of a detection of a plug at the pick-up unit of the baler. The plug signal is generated in response to a plug detection at the pick-up unit.

The plug detection can be carried out according to any of the known methods in this field. The Tim control unit, responsive to the plug detection signal, is programmed to carry out a series of automatic plug unblocking actions. The unblocking actions include generating a disengagement signal for disengaging the power take-off (PTO) of the tractor.

The unblocking actions include generating a lowering signal, for moving the drop-floor of the baler to the lowered position.

The unblocking actions include generating a re-engagement signal to re-engage the PTO shaft of the tractor, with the drop floor being in the lowered position and the tractor being stationary.

The unblocking actions include checking a condition representative of absence of plug at the pick-up.

The unblocking actions includes generating a lifting signal for moving the drop-floor of the baler to the raised position and a restart signal to restart the advancement of the tractor, in response to the condition being verified. The baler includes a hydraulic system. The hydraulic system includes a drop-floor configured for actuating the drop-floor. The hydraulic system includes a pick-up actuator configured for actuating the pick-up.

The hydraulic system includes a switching device configured for selectively feeding oil to the drop-floor actuator and to the pick-up actuator.

The TIM control unit is programmed to generate the re-engagement signal with the switching device set to feed oil to the drop-floor actuator, so to ensure that the switching device feeds oil to the drop-floor actuator at the time PTO is re-engaged.

The tractor may include a user interface. the TIM control unit is programmed for displaying an unblocking acknowledgement pop-up on the user interface of the tractor in response to the plug detection. The TIM control unit is programmed for generating the disengagement signal upon receiving a pop-up authorization command from the user.

The pick-up unit of the baler may include a plurality of knives. The TIM control unit may be programmed to generate a retracting signal to retract the knives in response to the plug detection.

TIM control unit may be programmed to generate a signal to lift the pick-up and to activate a reverse movement of the tractor in response to the plug detection. TIM control unit may be programmed to generate the restart signal with the switching device set to feed oil to the pick-up actuator, and with the pick-up actuator activated.

According to an aspect of the present description, the present invention provides a computer program including instructions configured to perform the steps of the method for automatic unblocking of feed intake plug in a baler towed by a tractor when run on the TIM control unit of the agricultural system according to one or more aspects of the present description.

This and other features of the invention will become more apparent from the following detailed description of a preferred, non-limiting example embodiment of it, with reference to the accompanying drawings, in which:

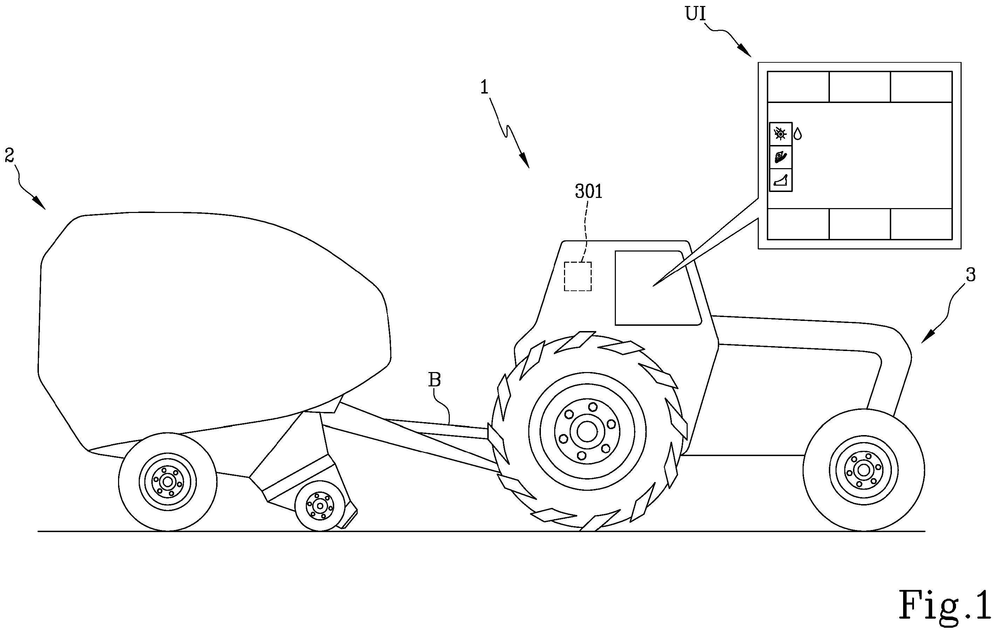

- figure 1 illustrates an agricultural system according to one or more aspects of the present disclosure;

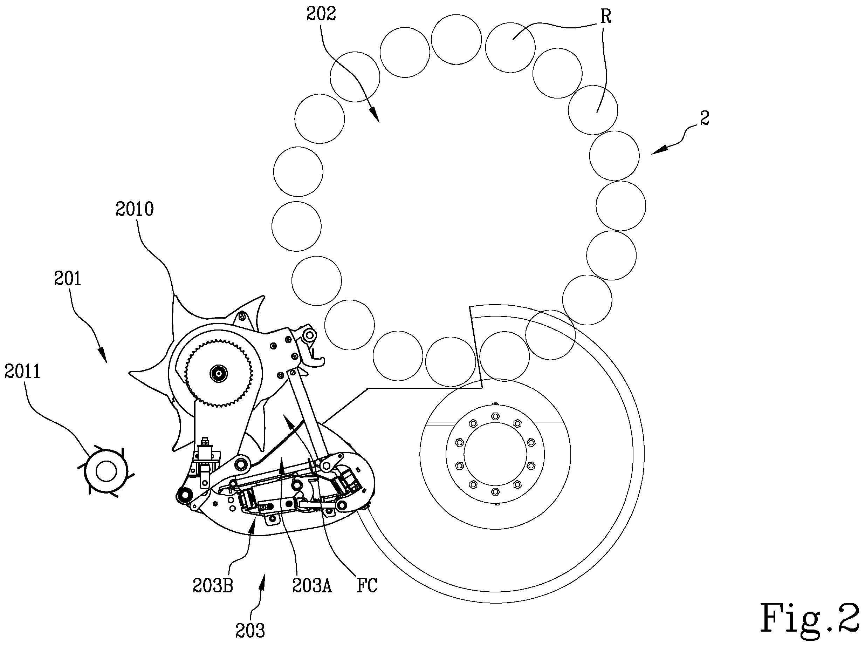

- figure 2 illustrates the agricultural machine in a working configuration;
- figure 3 is flow chart which illustrates the steps of a method for automatic unblocking of a feed intake plug in a baler towed by a tractor, according to one or more aspects of the present disclosure.
- figures 4 and 5 illustrate a user interface of the tractor.

With reference to the accompanying drawings, the numeral 1 denotes an agricultural system, according to the present disclosure. The Agricultural system includes a baler 2. The baler 2 comprises a frame. The frame provides an internal volume. The baler 2 also includes a pick-up unit 201. The baler 2 includes a compression chamber 202. The pick-up unit 201 is configured for picking up hay from the ground and for feeding it into the compression chamber 202. The pick-up unit has an inlet. The pick-up unit has an outlet. The inlet faces the ground. The outlet of the pick-up unit is inside the baler 2. The outlet faces the internal volume. The compression chamber is configured for compressing the hay to form the bale. In an example compression chamber may be of a variable diameter. In the compression chamber 202, the bale forming zone increases in size as the bale is formed within the chamber. The hay is fed to the compression chamber 202 from the outlet of the pick-up unit 201 in a feeding direction. The baler 2 comprises a plurality of guide rollers R. The plurality of guide rollers is placed inside the internal volume. The baler 2 also includes a plurality of belts. The belts of the plurality of belts are placed side by side in the internal volume. The belts of the plurality of belts are wound around the guide rollers so to define an endless loop. The loop is deformable for delimiting the compression chamber. Moreover, the guide rollers are rotatable for driving the belts around the loop. In particular each part of the plurality of belts is stretched between two consecutive rollers.

Therefore, the plurality of belts encircles the circumference of the bale which is formed inside the compression chamber. In particular the belts are deformed as the bale is being formed inside the compression chamber 202. therefore, the belts conform to the shape of the bale formed in the compression chamber.

The pick-up unit 201 includes a feeding drum 2011. The feeding drum collects the hay from the ground. In an example, the feeding drum 2011 is configured to rotate in a direction opposite to the direction of travel of the baler for sweeping the hay upwardly. The feeding drum has a plurality of tines on which project from the feeding drum for sweeping the hay.

The pick-up unit also includes a rotor 2010. The rotor 2010 is placed downstream of the feeding drum 2011. The rotor feeds the hay picked-up from the ground to the compression chamber of the baler. The rotor includes feeding blades. The baler 2 includes a feeding channel FD. The feeding channel FD extends between an inlet and an outlet. The inlet faces the feeding drum 2011. The outlet defines an opening in the compression chamber 202. Usually in case of a plug intake at the pick-up unit of a baler excessive picked-up crop is accumulated in the feeding channel.

The baler 2 includes a drop floor 203. The drop floor is located downstream of the pick-up unit and movable between a lowered position and a raised position. The drop-floor 203, defines a (portion of) a bottom side of the feeding channel FD. The drop-floor 203 is positioned between the inlet and the outlet of the feeding channel. The excessive crop can be accumulated anywhere below or above the drop floor.

The drop floor 203 includes an upper structure 203A and a lower structure 203B. The upper structure faces the feeding channel FD. The upper structure provides apertures (or slots). The lower structure 203B is located below the upper structure.

The baler 2 may include a plurality of knives, for cutting the crops advancing through the feeding channel FD. The plurality of knives project into the feeding channel from the drop-floor. The plurality of knives is movable between an active position where the knives project into the feeding channel and a retracted position where the knives are retracted.

The plurality of knives is mounted on the lower structure of the drop-floor. The plurality of knives passes through the apertures of the upper structure to project into the feeding channel. In an example, the lower structure is movable between the raised position and the lowered position. In the raised position the plurality of knives engages the upper structure to project into the feeding channel through the apertures of the upper structure to cut the crops, and in the lowered position the plurality of knives is disengaged and spaced apart from the upper structure. In particular, the lower structure is pivotable about a pivoting axis between the raised and the lowered position. The agricultural system 1 includes a tractor 3. The tractor 3 is configured to tow the baler 2. The tractor has a power take-off (PTO) shaft to transfer power to the baler. In particular, the power is transmitted from the PTO shaft of the tractor to a drive line of the baler, which transmits the power to different devices of the baler, including the rotor shaft and the feeding drum shaft to enables their rotation.

The tractor includes a tractor implement management (TIM) 301 control unit that establishes bidirectional exchange of control data between the baler and the tractor. The TIM control unit is electrically connected to the tractor and to the baler through respective buses B and is programmed for acting on electro-mechanical unities of the tractor and for controlling tractor functions based on signals provided by the baler 2. The TIM control unit is set up for receiving a plug signal representative of a detection of a plug at the pick-up unit of the baler. Therefore, when a plug is detected at the baler 2, by means of any of the known methods in the field, a signal is sent to the Tim control unit to notify the plug at the pick-up. In response to the plug detection, the Tim control unit commands disengaging of the power take-off (PTO) of the tractor. In particular, the TIM control unit generates a disengaging signal for disengaging the power take-off. The PTO is then disengaged automatically. It is to be mentioned that when the PTO is disengaged no power is transmitted to the baler, therefore, crop feeding, and bale formation is stopped. However, after the PTO disengagement the tractor can still advance. Stopping the advancement of the tractor can be done either automatically through the TIM control unit or manually by the operator. The tractor 2 includes a user interface UI. When the plug is detected and the plug detection signal is received at the TIM control unit, an unblocking acknowledgement pop-up message is shown on the user interface to inform the operator that plug is detected and to ask for authorization to start automatic unblocking steps (sequence) to automatically remove the plug at the pick-up unit. In one example, the tractor is provided with a physical button, though which the operator can authorize the pop-up and therefore allow the unblocking sequence to begin. Therefore, the unblocking sequence starts only when the pop-up is authorized by the operator. In one example, the pop-up is shown on the user interface before disengaging the PTO shaft; therefore, displaying the pop-up is the first step of the automatic unblocking sequence to remove the plug at the pick-up unit. The TIM control unit may send a message to the operator to stop the advancement of the tractor, in case this activity should be done manually. Preferably, the tractor, in response to the plug detection, is driven reversely for several meters. The revers movement of the tractor may be commanded by the TIM control unit. In another example, the operator TIM control unit may send a notification to the operator and ask the reveres movement of the tractor. In one example, the revers movement of the tractor can be done manually be the operator. preferably, the revers movement of the tractor is done before authorizing the pop-up message regarding the start of the unblocking sequence. Before the reverse advancement of the tractor, the pick-up is lifted. In particular, the feeding drum 2011 of the pick-up unit is lifted. Lifting of the pick-up is carried out automatically and through the TIM control unit. Consequently, the TIM control unit generates a lowering signal, and commands a movement of the drop-floor 203 of the baler to the lowered position. The TIM control unit then generates a re-engagement signal and commands a re-engagement of the PTO shaft of the tractor. In particular, the PTO shaft is re-engaged when the drop floor is in the lowered position and the tractor is stationary. In an example, the TIM control unit may send a pop-up message to ask acknowledgement for PTO re-engagement. In this example, the PTO is re-engaged after the operator authorizes the re-engagement of PTO. The TIM control unit then checks a condition representative of absence of plug at the pick-up. Therefore, in one example, checking if the plug is present at the pick-up unit is done after re-engaging the PTO shaft; therefore, presence of the plug is not detected prior to re-engagement of the PTO. In this example, checking if the plug is removed can be done for example by verifying if one or more of the shafts between the PTO shaft, the driving shaft (shaft providing the power to the pick-up unit), the rotor shaft and the feeding drum shaft is rotating properly. Alternatively, appropriate sensors can be provided which directly detects the presence of the plug at the pick-up unit.

When the condition representative of absence of plug is verified, the TIM control unit generates a lifting signal for moving the drop-floor of the baler to the raised position and commands a restart of the advancement of the tractor.

When knives are present at the pick-up unit, the TIM control unit commands retraction of the knives in response to plug detection. The retraction of the knives can be carried out prior to, after or at the same time as the lowering of the drop-floor.

The baler has a hydraulic system. The hydraulic system includes a switching device, a drop-floor actuator, to move the drop-floor between the raised and the lowered position and a pick-up actuator, to move the pickup upwards and downwards. The hydraulic system can also include a knives actuator for moving the knives between the active and the retracted position. The hydraulic system selectively actuates the pick-up and the drop floor, and the knives when available, though the mentioned actuators. The pick-up, drop-floor and the knives can be actuated separately and one at a time or simultaneously. The actuators of the pick-up, the drop-floor and the knives are hydraulic actuators and are fed with actuating oil (oil).

In particular, when the TIM control unit commands the movement of the drop-floor (to the raised or lowered position) the switching device is set to feed oil to the drop-floor actuator and the drop-floor actuator is commanded to actuate the drop-floor.

In one example, the switching device is a switch valve.

In this example, the drop-floor actuator is a cylinder-piston actuator and includes a lowering chamber and a lifting chamber. Upon feeding the oil to the lowering chamber the drop-floor is actuated downwards (to the lowered position) and upon feeding the oil to the lifting chamber the drop-floor is actuated upwards (to the raised position).

When the TIM control unit commands the movement of the drop-floor to the lowered position the switch device is commanded by the TIM control unit to feed oil to the lowering chamber of the drop-floor actuator and the drop-floor actuator is commanded to actuate the drop-floor downwards. When the TIM control unit commands the movement of the drop-floor to the raised position the switch device is commanded by the TIM control unit to feed oil to the raising chamber of the drop-floor actuator and the drop-floor actuator is commanded to actuate the drop-floor upwards.

In one example, during the downwards movement of the drop-floor towards the lowered position, the oil is fed to the drop-floor actuator for at least 5 seconds. Therefore, by continuous feeding of oil to the drop-floor over a pre-determined interval of time, which lasts at least 5 seconds, complete downwards movement of the drop-floor is verified. Alternatively, a position sensor can be used to verify that the drop-floor is completely moved downwards.

The Tim control unit sets the switching device to feed oil to the drop-floor actuator before re-engaging the PTO and/or during re-engaging the PTO of the tractor, so to ensure that the switching device feeds oil to the drop-floor actuator at the time PTO is re-engaged. In case the switch valve is used, before the PTO is re-engaged and/or during re-engagement of the PTO TIM control unit sets the switch valve to feed oil to the lowering chamber of the drop-floor actuator, which leads to a further downward movement of the drop floor in the moment of PTO re-engagement. Such a solution allows to make sure that the drop-floor is completely lowered.

As mentioned above, the pick-up unit may be lifted in response to plug detection (in particular when the tractor is driven backwards). In this case, the pick-up unit is commanded to be lifted by the TIM control unit and is actuated upwards through the pick-up actuator.

Similar to the drop-floor actuator, the drop-floor actuator may be a cylinder-piston actuator and include a lowering chamber and a lifting chamber. Upon feeding the oil to the lowering chamber the pick-up unit is actuated downwards and upon feeding the oil to the lifting chamber the pick-up unit is actuated upwards.

When the TIM control unit commands the upwards movement of the pick-up unit (before the revers movement of the tractor) the switch valve is commanded by the TIM control unit to feed oil to the raising chamber of the pick-up unit actuator and the pick-up unit actuator is commanded to actuate the pick-up unit upwards.

Moreover, before restarting the advancement of the tractor the TIM control unit commands the lowering movement of the pick-up unit and sets the switch valve to feed oil to the lowering chamber of the pick-up actuator and the pick-up actuator is commanded to actuate the pick-up downwards.

A position sensor may be used to verify that the pick-up unit is lowered before the advancement of the tractor. Alternatively, the position of the pick-up can be verified based on the flow of the oil; or example if the oil is commanded to be flown towards the pick-up actuator, the pick-up is considered to be lowered.

Similar to the drop-floor actuator, the knives actuator may be a cylinder-piston actuator and include an activating chamber and a retracting chamber. Upon feeding the oil to the activating chamber the knives are retracted and upon feeding the oil to the activating chamber the knives are activated.

When the TIM control unit commands the retracting movement of the knives, in response to the plug detection, the switch valve is commanded by the TIM control unit to feed oil to the retracting chamber of the knives actuator and the knives actuator is commanded to retract the knives.

After the PTO re-engagement and before or after or at the same time as lifting the drop-floor the knives are commanded to be activated (only if they were activated before the plug detection).

For activating the knives, the switch valve is set, by the TIM control unit to feed oil to the activating chamber of the knives actuator to activate the knives. In an example during the activation of the knives, oil is continuously flown to the knife's actuator for at least 3 seconds to make sure the knives are completely activated. Alternatively, sensors can be used to detect the proper activation of the knives.

In particular, in the embodiment in which the switching device is a switch valve, a 3-in-1 valve is used to direct the actuating oil alternatively between the pick-up, drop-floor and the knives (if available) actuators. Therefore, for each actuator one specific conduit can be provided through which the oil is flown. Therefore, in this example, 100% of the oil is flown to one of the mentioned actuators, at a time.

It is to be mentioned that the switching valve before the plug detection is used for different automatic functions (for example in bale formation); when the plug is detected automation of the switch valve is disengaged automatically, until the operator confirms the start of the unblocking sequence by authorizing the unblocking acknowledgement pop-up, so that the TIM control is authorized to resume automation.

However, in other examples the baler can be provided with actuators which work independently from each other to actuate the pick-up unit, the drop-floor and the knives (if available) at the same time or one at a time.

When the unblocking sequence is over and preferably before the restart of the advancement of the tractor, the oil flow is set according to the setting of the system before the plug detection (usually the switching device is set to feed oil to the pick-up unit). Generally, when the unblocking sequence is over, the position of the drop-floor, knives (if any) and the drop-floor is set back to the setting which was selected by the operator before the plug detection and before the unblocking sequence was started. So, the full setting of the baler which was applied by the operator before the plug detection and before TIM took control to automatically remove the plug is restored also after the unblocking.

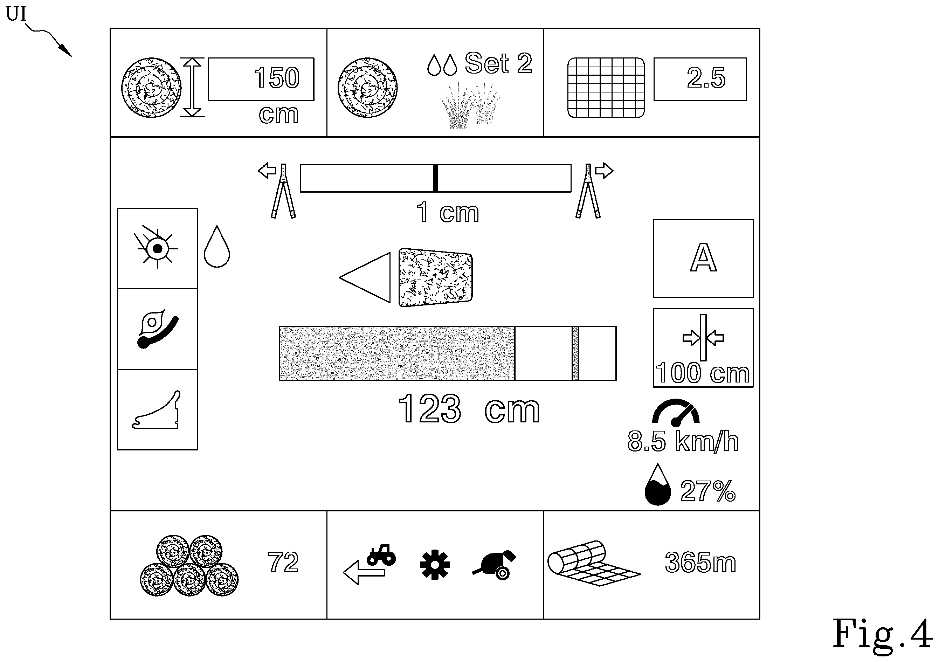

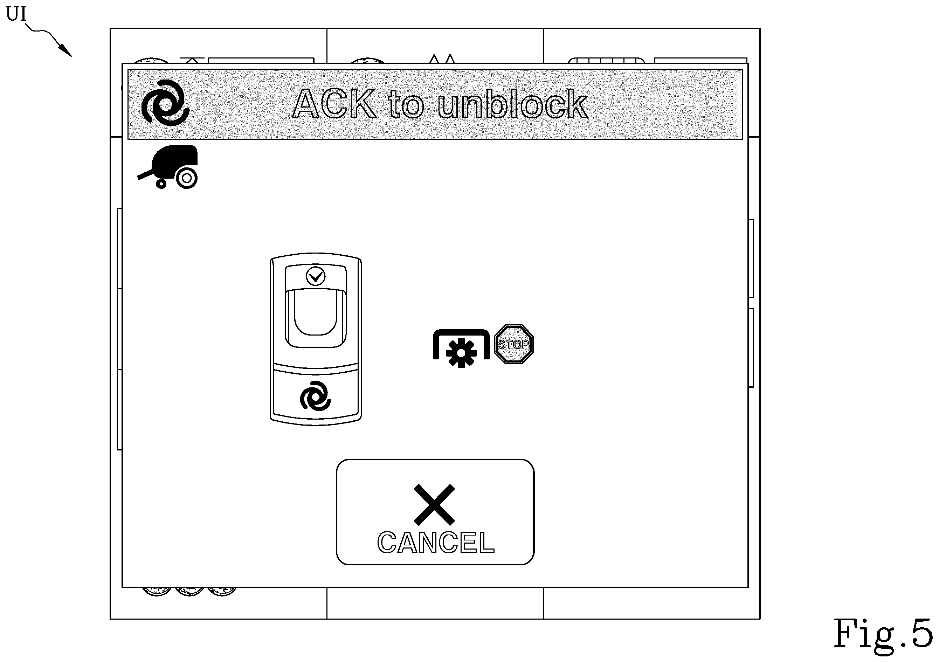

It is to be mentioned that the user interface displays specific icons for each of the pick-up unit, the drop-floor and knives (if available). These icons provide the operator with information of the position of the drop-floor, pick-up unit and the knives (lowered/lifted, activated/retracted) in real time. Moreover, in case of presence of the switching valve, the user interface displays to which actuator (pick-up, drop-floor, knives) the actuating oil is being flown, e.g. with a "switch" icon (for example having the shape of a drop), which is located beside the icon of the component (pick-up, drop-floor, knives) which is currently fed with oil. The user interface provides the operator with other information and settings of the agricultural system as well, for example the width of the crop to be picked up. Figures 4 and 5 illustrate the user interface and said icons. Figure 5 illustrates the unblocking acknowledgement pop-up. The user interface also displays an icon which shows that the TIM control is being run and if full automation is activated; in addition or as an alternative, the "switch" icon may be provided with two shapes that are used one in substitution of the other, depending on whether or not the TIM system has control (in this case, when the user sees the "switch" icon, he gets two information: what component is fed with oil (depending on the position of the "switch" icon) and whether or not the TIM system has control (depending on the shape of the "switch" icon).

Please note that if the condition representative of absence of plug at the pick-up is not verified, the whole unblocking sequence (including displaying the pop-up message) is carried out though the TIM control unit until the condition is verified and the tractor is allowed to restart the advancement.

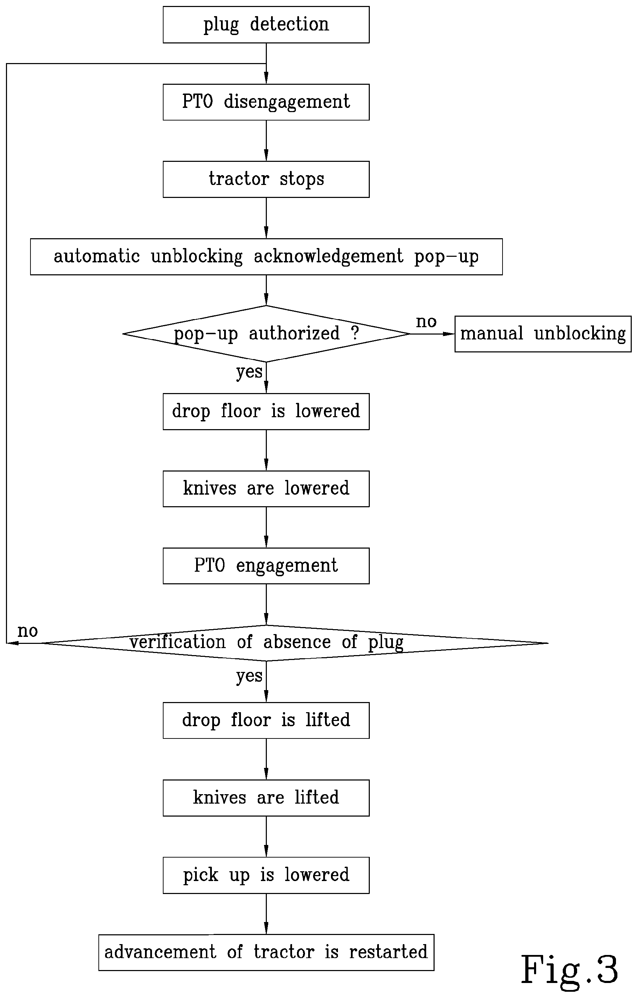

Referring to figure 3, a flowchart of the steps of the unblocking sequence according to one or more aspects of the present description is illustrated.

As it can be observed, when a plug is detected, the PTO is disengaged though a command sent from the TIM control unit. Consequently, the advancement of the tractor stops (either automatically or by the operator). Preferably, the TIM commands the reverse movement of the tractor and lifts the pick-up unit before the reverse movement. Then an automatic unblocking acknowledgement pop-up is displayed on the user interface. When the pop-up is authorized by the operator, the unblocking steps (sequence) proceed. Otherwise, the plug should be removed manually.

In the next step, the drop-floor is lowered. Consequently, if knives are available and activated, the knives are retracted. The step of retracting the knives can be carried out before lowering the drop-floor as well. PTO is then re-engaged, and it is verified if the plug is present at the pick-up. If absence of the plug is not verified all the previous steps (including disengagement of the PTO) are repeated until the condition regarding the absence of the plug is verified. Consequently, when the condition is verified, the drop-floor is lifted, the pick-up is lowered, and the knives are activated (only if they were activated before the sequence started). These actions can take place according to another order different from what is illustrated in the flow chart as well. Finally, the restart of the advancement of the tractor is commanded by the TIM control unit and the operator can proceed with the baling operation. Please note that all the steps of the automatic unblocking sequence according to the present disclosure are carried out through the TIM control unit.

## Claims

1. A method for automatic unblocking of a feed intake plug in a baler (2) towed by a tractor (3), the baler having a pick-up unit (201) for picking up hay from the ground and for feeding it into a compression chamber (202), and a drop floor (203), downstream of the pick-up unit and movable between a lowered position and a raised position, wherein the tractor is provided with a tractor implement management (TIM) control unit (301), that establishes bidirectional exchange of control data between the baler (2) and the tractor (3),
the method comprising the following unblocking steps, carried out through the TIM control unit:
- in response to a detection of a plug at the pick-up unit (201) of the baler (2), disengaging a power take-off (PTO) of the tractor;
- commanding a movement of the drop-floor (203) of the baler towards the lowered position;
- when the drop floor is lowered and the tractor is stationary, commanding a re-engagement of the PTO shaft of the tractor,
- checking a condition representative of absence of plug at the pick-up;
- if the condition is verified, commanding a movement of the drop floor of the baler towards the raised position and a restart of the advancement of the tractor, wherein the baler (2) comprises a hydraulic system including a switching device, a drop-floor actuator, and a pick-up actuator, for selectively actuating the pick-up (201) and the drop floor (203),
wherein the step of commanding the movement of the drop-floor (203) includes
setting the switching device to feed oil to the drop-floor actuator, commanding the drop-floor actuator, **characterized in that** the method , includes a step of setting the switching device to feed oil to the drop-floor actuator prior to or during the step of re-engaging the PTO of the tractor, so to ensure that the switching device feeds oil to the drop-floor actuator at the time PTO is re-engaged.

2. The method according to claim 1, wherein, in the step of moving the drop floor towards the lowered position, the oil is fed to the drop-floor actuator for at least 5 seconds.

3. The method according to any of the previous claims, comprising a step of displaying an unblocking acknowledgement pop-up on a user interface (UI) of the tractor (3), in response to the plug detection, wherein the unblocking steps are carried out upon receiving, at the TIM control unit (301), a pop-up authorization command from the user.

4. The method according to any of the previous claims, wherein the pick-up unit (201) of the baler (2) includes a plurality of knives, wherein the method includes a step of commanding, through the TIM control unit (301), a retracting movement of the knives, in response to the plug detection.

5. The method according to any of the previous claims, including a step of commanding, through the TIM control unit (301), a lifting of the pick-up (201) and a reverse movement of the tractor (3) in response to the plug detection.

6. The method according to claim 5, wherein the baler comprises a hydraulic system including a switching device, a drop-floor actuator, and a pick-up actuator, for selectively actuating the pick-up (201) and the drop floor (203), wherein the method includes a step of setting the switching device to feed oil to the pick-up actuator and commanding a lowering movement of pick-up, before the step of restarting the advancement of the tractor.

7. An agriculture system (1) comprising:
- a baler (2) having a pick-up unit (201) for picking up hay from the ground, a compression chamber (202) that receives the hay from the pick-up unit, and a drop floor (203), downstream of the pick-up unit and movable between a lowered position and a raised position;
- a tractor (3), configured to tow the baler, the tractor having a power take-off (PTO) shaft to transfer power to the baler, and a tractor implement management (TIM) (301) control unit that establishes bidirectional exchange of control data between the baler and the tractor,
wherein the TIM control unit is set up for receiving a plug signal representative of a detection of a plug at the pick-up unit of the baler, and is programmed to carry out the following actions, responsive to the plug detection signal:
- generate a disengagement signal for disengaging the power take-off (PTO) of the tractor;
- generate a lowering signal, for moving the drop-floor of the baler to the lowered position;
- generate a re-engagement signal to re-engage the PTO shaft of the tractor (3), with the drop floor being in the lowered position and the tractor being stationary;
- checking a condition representative of absence of plug at the pick-up (201);
- in response to the condition being verified, generate a lifting signal for moving the drop-floor (203) of the baler to the raised position and a restart signal to restart the advancement of the tractor, wherein the baler includes a hydraulic system including:
- a drop-floor configured for actuating the drop-floor (203);
- a pick-up actuator configured for actuating the pick-up (201);
- a switching device configured for selectively feeding oil to the drop-floor actuator and to the pick-up actuator,
**characterized in that** the TIM control unit (301) is programmed to generate the re-engagement signal with the switching device set to feed oil to the drop-floor actuator, so to ensure that the switching device feeds oil to the drop-floor actuator at the time PTO is re-engaged.

8. The agricultural system according to claim 7, wherein the tractor includes a user interface (UI), wherein the TIM control unit is programmed for displaying an unblocking acknowledgement pop-up on the user interface of the tractor in response to the plug detection, wherein the TIM control unit is programmed for generating the disengagement signal upon receiving a pop-up authorization command from the user.

9. The agricultural system according to any of claims from 7 to 8, wherein the pick-up unit (201) of the baler includes a plurality of knives and wherein the TIM control unit is programmed to generate a retracting signal to retract the knives in response to the plug detection.

10. The agricultural system according to any of the previous claims from 7 to 9, wherein the TIM control unit (301) is programmed to generate a signal to lift the pick-up and to activate a reverse movement of the tractor in response to the plug detection.

11. The agricultural system according to claim 9, wherein the baler comprises a hydraulic system including:
- a drop-floor actuator configured for actuating the drop-floor;
- a pick-up actuator configured for actuating the pick-up;
- a switching device configured for selectively feeding oil to the drop-floor actuator and to the pick-up actuator,
wherein the TIM control unit is programmed to generate the restart signal with the switching device set to feed oil to the pick-up actuator, and with the pick-up actuator activated.

12. A computer program including instructions configured to perform the steps of claims 1 to 6 when run on the TIM control unit of the agricultural system of any of the previous claims from 7 to 11.

## Patentansprüche

1. Verfahren zur automatischen Beseitigung einer Zuführeinzugverstopfung in einer von einem Traktor (3) gezogenen Ballenpresse (2), wobei die Ballenpresse eine Aufnahmeeinheit (201) zum Aufnehmen von Heu vom Boden und dessen Zuführen zu einer Presskammer (202) aufweist sowie einen Absenkboden (203) stromabwärts der Aufnahmeeinheit und bewegbar zwischen einer abgesenkten Stellung und einer angehobenen Stellung, wobei der Traktor mit einer Traktoranbaugerätemanagement (TIM)-Steuereinheit (301) versehen ist, die einen bidirektionalen Austausch von Steuerdaten zwischen der Ballenpresse (2) und dem Traktor (3) veranlasst,
wobei das Verfahren die folgenden Beseitigungsschritte umfasst, die über die TIM-Steuereinheit durchgeführt werden:
- als Reaktion auf eine Erkennung einer Verstopfung an der Aufnahmeeinheit (201) der Ballenpresse (2) Ausrücken einer Zapfwelle (PTO) des Traktors;
- Erteilen eines Befehls für eine Bewegung des Absenkbodens (203) der Ballenpresse in Richtung der abgesenkten Stellung;
- Erteilen eines Befehls für ein Wiedereinrücken der PTO des Traktors, wenn der Absenkboden abgesenkt ist und der Traktor stationär ist;
- Prüfen eines Zustands, der für das Fehlen einer Verstopfung an der Aufnahme repräsentativ ist;
- falls der Zustand nachgewiesen ist, Erteilen eines Befehls für eine Bewegung des Absenkbodens der Ballenpresse in Richtung der angehobenen Stellung und einen Neustart der Vorwärtsfahrt des Traktors, wobei die Ballenpresse (2) ein Hydrauliksystem umfasst, das eine Schaltvorrichtung, eine Absenkbodenbetätigungseinrichtung und eine Aufnahmebetätigungseinrichtung zum wahlweisen Betätigen der Aufnahme (201) und des Absenkbodens (203) beinhaltet,
wobei der Schritt des Erteilens eines Befehls für die Bewegung des Absenkbodens (203) Folgendes beinhaltet:
Einstellen der Schaltvorrichtung zum Zuführen von Öl zu der Absenkbodenbetätigungseinrichtung, Erteilen eines Befehls an die Absenkbodenbetätigungseinrichtung,
**dadurch gekennzeichnet, dass** das Verfahren einen Schritt des Einstellens der Schaltvorrichtung zum Zuführen von Öl zu der Absenkbodenbetätigungseinrichtung vor dem oder während des Schritts des Wiedereinrückens der PTO des Traktors beinhaltet, sodass sichergestellt wird, dass die Schaltvorrichtung der Absenkbodenbetätigungseinrichtung zu dem Zeitpunkt Öl zuführt, zu dem die PTO wieder eingerückt ist.

2. Verfahren nach Anspruch 1, wobei das Öl der Absenkbodenbetätigungseinrichtung beim Schritt des Bewegens des Absenkbodens in Richtung der abgesenkten Stellung für mindestens 5 Sekunden zugeführt wird.

3. Verfahren nach einem der vorhergehenden Ansprüche, umfassend einen Schritt des Anzeigens einer Aufforderung zur Bestätigung der Beseitigung auf einer Benutzerschnittstelle (UI) des Traktors (3) als Reaktion auf die Verstopfungserkennung, wobei die Beseitigungsschritte bei Empfangen eines Freigabebefehls seitens des Benutzers per Aufforderung an der TIM-Steuereinheit (301) durchgeführt werden.

4. Verfahren nach einem der vorhergehenden Ansprüche, wobei die Aufnahmeeinheit (201) der Ballenpresse (2) eine Vielzahl von Messern beinhaltet, wobei das Verfahren als Reaktion auf die Verstopfungserkennung einen Schritt des Erteilens eines Befehls für eine Einfahrbewegung der Messer über die TIM-Steuereinheit (301) beinhaltet.

5. Verfahren nach einem der vorhergehenden Ansprüche, das als Reaktion auf die Verstopfungserkennung einen Schritt des Erteilens eines Befehls für ein Heben der Aufnahme (201) und eine Rückfahrbewegung des Traktors (3) über die TIM-Steuereinheit (301) beinhaltet.

6. Verfahren nach Anspruch 5, wobei die Ballenpresse ein Hydrauliksystem umfasst, das eine Schaltvorrichtung, eine Absenkbodenbetätigungseinrichtung und eine Aufnahmebetätigungseinrichtung zum wahlweisen Betätigen der Aufnahme (201) und des Absenkbodens (203) beinhaltet, wobei das Verfahren einen Schritt des Einstellens der Schaltvorrichtung zum Zuführen von Öl zu der Aufnahmebetätigungseinrichtung und des Erteilens eines Befehls für eine Absenkbewegung der Aufnahme vor dem Schritt des Neustartens der Vorwärtsfahrt des Traktors beinhaltet.

7. Landwirtschaftliches System (1), umfassend:
- eine Ballenpresse (2), die eine Aufnahmeeinheit (201) zum Aufnehmen von Heu von dem Boden, eine Presskammer (202), die das Heu von der Aufnahmeeinheit empfängt, und einen Absenkboden (203) stromabwärts der Aufnahmeeinheit und bewegbar zwischen einer abgesenkten Stellung und einer angehobenen Stellung aufweist;
- einen Traktor (3), der ausgelegt ist, um die Ballenpresse zu ziehen, wobei der Traktor eine Zapfwelle (PTO) zum Übertragen von Leistung auf die Ballenpresse und eine Traktoranbaugerätemanagement (TIM)-Steuereinheit (301) aufweist, die einen bidirektionalen Austausch von Daten zwischen der Ballenpresse und dem Traktor veranlasst,
wobei die TIM-Steuereinheit eingerichtet ist, um ein Verstopfungssignal zu empfangen, das repräsentativ für eine Erkennung einer Verstopfung an der Aufnahmeeinheit der Ballenpresse ist, und programmiert ist, um die folgenden Vorgänge als Reaktion auf das Verstopfungserkennungssignal durchzuführen:
- Generieren eines Ausrücksignals zum Ausrücken der Zapfwelle (PTO) des Traktors;
- Generieren eines Absenksignals zum Bewegen des Absenkbodens der Ballenpresse in die abgesenkte Stellung;
- Generieren eines Wiedereinrücksignals zum Wiedereinrücken der PTO des Traktors (3), wobei sich der Absenkboden in der abgesenkten Stellung befindet und der Traktor stationär ist;
- Prüfen eines Zustands, der für das Fehlen einer Verstopfung an der Aufnahme (201) repräsentativ ist;
- als Reaktion darauf, dass der Zustand nachgewiesen ist, Generieren eines Hebesignals zum Bewegen des Absenkbodens (203) der Ballenpresse in die angehobene Stellung und eines Neustartsignals zum Neustarten der Vorwärtsfahrt des Traktors, wobei die Ballenpresse ein Hydrauliksystem beinhaltet, das Folgendes beinhaltet:
- einen Absenkboden, der ausgelegt ist, um den Absenkboden (203) zu betätigen;
- eine Aufnahmebetätigungseinrichtung, die ausgelegt ist, um die Aufnahme (201) zu betätigen;
- eine Schaltvorrichtung, die ausgelegt ist, um der Absenkbodenbetätigungseinrichtung und der Aufnahmebetätigungseinrichtung wahlweise Öl zuzuführen, **dadurch gekennzeichnet, dass** die TIM-Steuereinheit (301) programmiert ist, um das Wiedereinrücksignal zu generieren, wobei die Schaltvorrichtung eingestellt ist, um der Absenkbodenbetätigungseinrichtung Öl zuzuführen, sodass sichergestellt wird, dass die Schaltvorrichtung der Absenkbodenbetätigungseinrichtung zu dem Zeitpunkt Öl zuführt, zu dem die PTO wieder eingerückt ist.

8. Landwirtschaftliches System nach Anspruch 7, wobei der Traktor eine Benutzerschnittstelle (UI) beinhaltet, wobei die TIM-Steuereinheit zum Anzeigen einer Aufforderung zur Bestätigung der Beseitigung auf der Benutzerschnittstelle des Traktors als Reaktion auf die Verstopfungserkennung programmiert ist, wobei die TIM-Steuereinheit zum Generieren des Ausrücksignals bei Empfangen eines Freigabebefehls seitens des Benutzers per Aufforderung programmiert ist.

9. Landwirtschaftliches System nach einem der Ansprüche 7 bis 8, wobei die Aufnahmeeinheit (201) der Ballenpresse eine Vielzahl von Messern beinhaltet, und wobei die TIM-Steuereinheit programmiert ist, um als Reaktion auf die Verstopfungserkennung ein Einfahrsignal zu generieren, um die Messer einzufahren.

10. Landwirtschaftliches System nach einem der vorhergehenden Ansprüche 7 bis 9, wobei die TIM-Steuereinheit (301) programmiert ist, um ein Signal zum Heben der Aufnahme und zum Aktivieren einer Rückwärtsbewegung des Traktors als Reaktion auf die Verstopfungserkennung zu generieren.

11. Landwirtschaftliches System nach Anspruch 9, wobei die Ballenpresse ein Hydrauliksystem umfasst, das Folgendes beinhaltet:
- eine Absenkbodenbetätigungseinrichtung, die ausgelegt ist, um den Absenkboden zu betätigen;
- eine Aufnahmebetätigungseinrichtung, die ausgelegt ist, um die Aufnahme zu betätigen;
- eine Schaltvorrichtung, die ausgelegt ist, um der Absenkbodenbetätigungseinrichtung und der Aufnahmebetätigungseinrichtung wahlweise Öl zuzuführen, wobei die TIM-Steuereinheit programmiert ist, um das Neustartsignal zu generieren, wobei die Schaltvorrichtung eingestellt ist, um der Aufnahmebetätigungseinrichtung Öl zuzuführen, und die Aufnahmebetätigungseinrichtung aktiviert ist.

12. Computerprogramm, beinhaltend Anweisungen, die ausgelegt sind, um die Schritte der Ansprüche 1 bis 6 durchzuführen, wenn es auf der TIM-Steuereinheit des landwirtschaftlichen Systems nach einem der vorherigen Ansprüche 7 bis 11 ausgeführt wird.

## Revendications

1. Procédé d'élimination automatique d'une obstruction d'admission d'alimentation dans une presse à balles (2) remorquée par un tracteur (3), la presse à balles comportant une unité de ramassage (201) pour ramasser le foin du sol et l'alimenter dans une chambre de compression (202), et un fond abaissable (203), en aval de l'unité de ramassage et mobile entre une position abaissée et une position soulevée, dans lequel le tracteur est pourvu d'une unité de commande (301) de gestion d'outil de tracteur (TIM), qui établit un échange bidirectionnel de données de commande entre la presse à balles (2) et le tracteur (3),
le procédé comprenant les étapes d'élimination suivantes, réalisées par l'intermédiaire de l'unité de commande TIM :
- en réponse à une détection d'une obstruction au niveau de l'unité de ramassage (201) de la presse à balles (2), désengager une prise de force (PDF) du tracteur ;
- commander un mouvement du fond abaissable (203) de la presse à balles vers la position abaissée ;
- lorsque le fond abaissable est abaissé et que le tracteur est à l'arrêt, commander un réengagement de l'arbre de PDF du tracteur,
- contrôler une condition représentative d'absence d'obstruction au niveau du ramassage ;
- si la condition est vérifiée, commander un déplacement du fond abaissable de la presse à balles vers la position soulevée et un redémarrage de l'avancement du tracteur, dans lequel la presse à balles (2) comprend un système hydraulique incluant un dispositif de commutation, un actionneur de fond abaissable et un actionneur de ramassage, pour actionner de manière sélective le ramassage (201) et le fond abaissable (203),
dans lequel l'étape de commander le mouvement du fond abaissable (203) inclut
régler le dispositif de commutation pour alimenter en huile l'actionneur de fond abaissable, commander l'actionneur de fond abaissable, **caractérisé en ce que** le procédé inclut une étape de régler le dispositif de commutation pour alimenter en huile l'actionneur de fond abaissable avant ou pendant l'étape de réengager la PDF du tracteur, afin de s'assurer que le dispositif de commutation alimente en huile l'actionneur de fond abaissable au moment où la PDF est réengagée.

2. Procédé selon la revendication 1, dans lequel, dans l'étape de déplacer le fond abaissable vers la position abaissée, l'huile est délivrée à l'actionneur de fond abaissable pendant au moins 5 secondes.

3. Procédé selon l'une quelconque des revendications précédentes, comprenant une étape d'afficher une fenêtre contextuelle de confirmation d'élimination sur une interface utilisateur (UI) du tracteur (3), en réponse à la détection d'obstruction, dans lequel les étapes d'élimination sont effectuées à la réception, au niveau de l'unité de commande TIM (301), d'une commande d'autorisation de fenêtre contextuelle de la part de l'utilisateur.

4. Procédé selon l'une quelconque des revendications précédentes, dans lequel l'unité de ramassage (201) de la presse à balles (2) inclut une pluralité de couteaux, dans lequel le procédé inclut une étape de commander, par l'intermédiaire de l'unité de commande TIM (301), un mouvement de rétraction des couteaux, en réponse à la détection d'obstruction.

5. Procédé selon l'une quelconque des revendications précédentes, incluant une étape de commander, par l'intermédiaire de l'unité de commande TIM (301), un soulèvement du ramassage (201) et un mouvement inverse du tracteur (3) en réponse à la détection d'obstruction.

6. Procédé selon la revendication 5, dans lequel la presse à balles comprend un système hydraulique incluant un dispositif de commutation, un actionneur de fond abaissable et un actionneur de ramassage, pour actionner de manière sélective le ramassage (201) et le fond abaissable (203), dans lequel le procédé inclut une étape de régler le dispositif de commutation pour alimenter en huile l'actionneur de ramassage et commander un mouvement d'abaissement de ramassage, avant l'étape de redémarrer l'avancement du tracteur.

7. Système agricole (1) comprenant :
- une presse à balles (2) comportant une unité de ramassage (201) pour ramasser le foin du sol, une chambre de compression (202) qui reçoit le foin de l'unité de ramassage, et un fond abaissable (203), en aval de l'unité de ramassage et mobile entre une position abaissée et une position soulevée ;
- un tracteur (3), configuré pour remorquer la presse à balles, le tracteur comportant un arbre de prise de force (PDF) pour transférer la puissance à la presse à balles, et une unité de commande de gestion d'outil de tracteur (TIM) (301) qui établit un échange bidirectionnel de données de commande entre la presse à balles et le tracteur,
dans lequel l'unité de commande TIM est configurée pour recevoir un signal d'obstruction représentatif d'une détection d'une obstruction au niveau de l'unité de ramassage de la presse à balles, et est programmée pour effectuer les actions suivantes, en réponse au signal de détection d'obstruction :
- générer un signal de désengagement pour désengager la prise de force (PDF) du tracteur ;
- générer un signal d'abaissement, pour déplacer le fond abaissable de la presse à balles en position abaissée ;
- générer un signal de réengagement pour réengager l'arbre de PDF du tracteur (3), le fond abaissable étant en position abaissée et le tracteur étant à l'arrêt ;
- contrôler une condition représentative de l'absence d'obstruction au niveau du ramassage (201) ;
- en réponse à la condition vérifiée, générer un signal de soulèvement pour déplacer le fond abaissable (203) de la presse à balles vers la position soulevée et un signal de redémarrage pour redémarrer l'avancement du tracteur, dans lequel la presse à balles inclut un système hydraulique incluant :
- un fond abaissable configuré pour actionner le fond abaissable (203) ;
- un actionneur de ramassage configuré pour actionner le ramassage (201) ;
- un dispositif de commutation configuré pour alimenter de manière sélective en huile l'actionneur de fond abaissable et l'actionneur de ramassage,
**caractérisé en ce que** l'unité de commande TIM (301) est programmée pour générer le signal de réengagement avec le dispositif de commutation réglé pour alimenter en huile l'actionneur de fond abaissable, afin de s'assurer que le dispositif de commutation alimente en huile l'actionneur de fond abaissable au moment où la PDF est réengagée.

8. Système agricole selon la revendication 7, dans lequel le tracteur inclut une interface utilisateur (UI), dans lequel l'unité de commande TIM est programmée pour afficher une fenêtre contextuelle de confirmation d'élimination sur l'interface utilisateur du tracteur en réponse à la détection d'obstruction, dans lequel l'unité de commande TIM est programmée pour générer le signal de désengagement à la réception d'une commande d'autorisation de fenêtre contextuelle de la part de l'utilisateur.

9. Système agricole selon l'une quelconque des revendications 7 à 8, dans lequel l'unité de ramassage (201) de la presse à balles inclut une pluralité de couteaux et dans lequel l'unité de commande TIM est programmée pour générer un signal de rétraction pour rétracter les couteaux en réponse à la détection d'obstruction.

10. Système agricole selon l'une quelconque des revendications précédentes 7 à 9, dans lequel l'unité de commande TIM (301) est programmée pour générer un signal pour soulever le ramassage et pour activer un mouvement inverse du tracteur en réponse à la détection d'obstruction.

11. Système agricole selon la revendication 9, dans lequel la presse à balles comprend un système hydraulique incluant :
- un actionneur de fond abaissable configuré pour actionner le fond abaissable ;
- un actionneur de ramassage configuré pour actionner le ramassage ;
- un dispositif de commutation configuré pour alimenter de manière sélective en huile l'actionneur de fond abaissable et l'actionneur de ramassage,
dans lequel l'unité de commande TIM est programmée pour générer le signal de redémarrage avec le dispositif de commutation réglé pour alimenter en huile l'actionneur de ramassage, et avec l'actionneur de ramassage activé.

12. Programme informatique incluant des instructions configurées pour effectuer les étapes des revendications 1 à 6 lorsqu'il est exécuté sur l'unité de commande TIM du système agricole de l'une quelconque des revendications précédentes de 7 à 11.
